# NEUE EUROPÄISCHE PATENTSCHRIFT

(11) **EP 0 643 100 B2**
(45) Veröffentlichungstag und Bekanntmachung des Hinweises auf die Entscheidung über den Einspruch: **29.01.2003**
(45) Hinweis auf die Patenterteilung: 30.07.1997
(21) Anmeldenummer: 94113857.0
(22) Anmeldetag: 03.09.1994
(51) Int. Cl.: C08L 23/12

(54) **Kälteschlagzähe Zusammensetzung aus semicrystallinen Propylen-Homopolymeren**
Low temperature impact-resistant composition of semicrystalline propylene homopolymers
Composition des homopolymères de propylène semi-cristallins résistant à disques à basse température

(30) Priorität: 10.09.1993 DE 4330661
(43) Veröffentlichungstag der Anmeldung: 15.03.1995
(73) Patentinhaber: Basell Polyolefine GmbH, 77694 Kehl (DE)
(72) Erfinder: Seelert, Stefan, Dr., D-67227 Frankenthal (DE); Langhauser, Franz, Dr., D-67098 Bad Dürkheim (DE); Kerth, Jürgen, Dr., D-67316 Carlsberg (DE); Müller, Patrick, Dr., D-67661 Kaiserslautern (DE); Fischer, David, Dr., D-67161 Gönnheim (DE); Schweier, Günther, Dr., D-67159 Friedelsheim (DE)
(74) Vertreter: Seelert, Stefan, Dr.

(56) Entgegenhaltungen:
- EP-A- 0 537 686
- EP-A- 0 550 214
- DE-A- 3 827 565
- DE-A- 4 130 429

## Beschreibung

Die vorliegende Erfindung betrifft Propylenpolymerisate, enthaltend
A) ein teilkristallines Propylen-Homopolymerisat mit einem Schmelzpunkt im Bereich von 125°C bis 165°C und einer Glastemperatur, die größer als -10°C ist und
B) ein teilkristallines Propylen-Homopolymerisat mit einem Schmelzpunkt unter 130°C und einer Glastemperatur, die kleiner als oder gleich -10°C ist oder ein nicht kristallisierendes Propylen-Homopolymerisat mit einer Glastemperatur, die kleiner als oder gleich -10°C ist.

Weiterhin betrifft die Erfindung Verfahren zur Herstellung derartiger Propylenpolymerisate, deren Verwendung zur Herstellung von Fasern, Folien und Formkörpern sowie die hierbei erhältlichen Fasern, Folien und Formkörper aus den Propylenpolymerisaten.

In der DE-A 38 27 565 und der DE-A 40 01 157 sind kalteschlagzähe Propylenpolymerisate beschrieben, die aus einer steifen Homopolypropylenmatrix und einem Ethylen-Propylen-Elastomeren bestehen. Die Homopolypropylenmatrix und die Ethylen-Propylen-Elastomeren werden in verschiedenen Polymerisationseinheiten hergestellt und entweder anschließend im Extruder gemischt oder es wird eine Reaktorkaskade verwendet, wobei in der ersten Reaktionszone die Homopolypropylenmatrix erzeugt wird und anschließend in einer zweiten oder ggf. weiteren Reaktionszone ein Ethylen-Propylen-Elastomer hinzupolymerisiert wird. Diese Herstellverfahren sind in der EP-A 433 990 und der DE-A 41 30 429 beschrieben. Durch die Verwendung zweier unterschiedlicher Monomeren sind diese Verfahren jedoch technisch aufwendig, da die Reaktionsführung in den einzelnen Reaktionszonen aufeinander abgestimmt werden muß und auch die Überführung von einer Reaktionszone in eine andere mit regeltechnischen Schwierigkeiten verbunden ist.

Aufgabe der vorliegenden Erfindung war es daher, den geschilderten Nachteilen abzuhelfen und kälteschlagzähe Propylenpolymerisate ur Verfügung zur stellen, die mit geringerem verfahrenstechnischem Aufwand hergestellt werden können.

Demgemäß wurden die eingangs definierten Propylenpolymerisate gefunden. Außerdem wurden Verfahren zur Herstellung derartiger Propylenpolymerisate, deren Verwendung zur Herstellung von Fasern, Folien und Formkörpern sowie die hierbei erhältlichen Folien und Formkörper aus den Propylenpolymerisaten gefunden.

Die Herstellung der erfindungsgemäßen Propylenpolymerisate kann durch Mischen der Komponenten A) und B) in üblichen Vorrichtungen wie in Brabender-Mischern, Knetern oder Extrudern erfolgen. Bevorzugt jedoch ist die Herstellung der erfindungsgemäßen Propylenpolymerisate in einer einzigen Reaktionszone in Anwesenheit zweier unterschiedlicher Katalysatorsysteme. Dabei werden zwei unterschiedliche Propylen-Homopolymerisate A) und B) dadurch erhalten, daß Propylen an den beiden unterschiedlichen Katalysatorsystemen polymerisiert.

Geeignete Katalysatorsysteme zur Herstellung der teilkristallinen Propylen-Homopolymerisate A) sind beispielsweise Ziegler-Natta-Katalysatoren.

Diese enthalten u.a. neben einer titanhaltigen Feststoffkomponente noch einen Cokatalysator. Als Cokatalysator kommt dabei eine Aluminiumverbindung in Frage. Vorzugsweise wird neben dieser Aluminiumverbindung als weiterer Bestandteil des Cokatalysators noch eine Elektronendonorverbindung eingesetzt. Die Polymerisation erfolgt dabei in den, in der Technik üblicherweise für Polymerisationsreaktionen verwendeten Reaktoren, vorzugsweise in der Gasphase.

Zur Herstellung der titanhaltigen Feststoffkomponente werden als Titanverbindungen im allgemeinen Halogenide oder Alkoholate des drei- oder vierwertigen Titans verwendet, wobei die Chloride des Titans, insbesondere Titantetrachlorid, bevorzugt sind. Vorteilhaft enthält die titanhaltige Feststoffkomponente einen feinteiligen Träger, wofür sich Silicium- und Aluminiumoxide, sowie Aluminiumsilicate der Bruttoformel SiO₂ · aAl₂O₃, wobei a für einen Wert von 0,001 bis 2, insbesondere von 0,01 bis 0,5 steht, gut bewährt haben. Weitere Träger sind u.a. feinteilige Polyolefine, beispielsweise feinteiliges Polypropylen.

Weiter werden bei der Herstellung der titanhaltigen Feststoffkomponente u.a. Verbindungen des Magnesiums eingesetzt. Als solche kommen insbesondere Magnesiumhalogenide, Magnesiumalkyle und Magnesiumaryle, sowie Magnesiumalkoxy- und Magnesiumaryloxyverbindungen in Betracht, wobei bevorzugt Magnesiumdichlorid, Magnesiumdibromid und Magnesiumdi-(C₁-C₁₀-alkyl)-Verbindungen verwendet werden. Daneben kann die titanhaltige Feststoffkomponente noch Halogen, bevorzugt Chlor oder Brom, enthalten.

Ferner enthält die titanhaltige Feststoffkomponente noch Elektronendonorverbindungen, beispielsweise monooder polyfunktionelle Carbonsäuren, Carbonsäureanhydride und Carbonsäureester, ferner Ketone, Ether, Alkohole, Lactone, sowie phosphor- und siliciumorganische Verbindungen. Bevorzugt werden als Elektronendonorverbindungen innerhalb der titanhaltigen Feststoffkomponente Phthalsäurederivate der allgemeinen Formel III 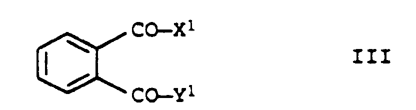 verwendet, wobei X¹ und Y¹ jeweils für ein Chloratom oder einen C₁- bis C₁₀-Alkoxyrest oder gemeinsam für Sauerstoff stehen. Besonders bevorzugte Elektronendonorverbindungen sind Phthalsäureester, wobei X¹ und Y¹ einen C₁-C₈-Alkoxyrest, beispielsweise einen Methoxy-, Ethoxy-, Propyloxy- oder einen Butoxyrest bedeuten.

Weiter bevorzugte Elektronendonorverbindungen innerhalb der titanhaltigen Feststoffkomponenten sind u.a. Diester von 3- oder 4-gliedrigen, gegebenenfalls substituierten Cycloalkyl-1,2-dicarbonsäuren, sowie Monoester von, gegebenenfalls substituierten Benzophenon-2-carbonsäuren.

Als Hydroxyverbindungen werden bei diesen Estern die bei Veresterungsreaktionen üblichen Alkohole verwendet, u.a. C₁- bis C₁₅-Alkanole, C₅- bis C₇-Cycloalkanole, die ihrerseits C₁- bis C₁₀-Alkylgruppen tragen können, ferner C₆-bis C₁₀-Phenole.

Die titanhaltige Feststoffkomponente kann nach an sich bekannten Methoden hergestellt werden. Beispiele dafür sind u.a. in der EP-A 45 975, der EP-A 45 977, der EP-A 86 473, der EP-A 171 200, der GB-A 2 111 066 und der US-A 4 857 613 beschrieben.

Die dadurch erhältliche titanhaltige Feststoffkomponente wird mit Cokatalysatoren als Ziegler-Natta-Katalysatorsystem verwendet. Als Cokatalysatoren kommen dabei Aluminiumverbindungen und weitere Elektronendonorverbindungen in Frage.

Als Cokatalysator geeignete Aluminiumverbindungen sind neben Trialkylaluminium auch solche Verbindungen, bei denen eine Alkylgruppe durch eine Alkoxygruppe oder durch ein Halogenatom, beispielsweise durch Chlor oder Brom, ersetzt ist. Bevorzugt werden Trialkylaluminiumverbindungen verwendet, deren Alkylgruppen jeweils 1 bis 8 C-Atome aufweisen, beispielsweise Trimethyl-, Triethyl- oder Methyldiethylaluminium.

Bevorzugt verwendet man neben der Aluminiumverbindung noch als weiteren Cokatalysator Elektronendonorverbindungen wie beispielsweise mono- oder polyfunktionelle Carbonsäuren, Carbonsäureanhydride und Carbonsäureester, femer Ketone, Ether, Alkohole, Lactone, sowie phosphor- und siliciumorganische Verbindungen. Bevorzugte Elektronendonorverbindungen sind dabei siliciumorganische Verbindungen der allgemeinen Formel IV

R¹⁴ ₚSi(OR¹⁵)₄₋ₚ IV

wobei
R¹⁴ gleich oder verschieden ist und eine C₁ - bis C₂₀-Alkylgruppe, eine 5- bis 7-gliedrige Cycloalkylgruppe, die ihrerseits eine C₁- bis C₁₀-Alkylgruppe tragen kann, oder eine C₆- bis C₂₀-Aryl oder eine C₇- bis C₄₀-Arylalkylgruppe bedeutet, R¹⁵ gleich oder verschieden ist und eine C₁- bis C₂₀-Alkylgruppe bedeutet und p für die Zahlen 1, 2 oder 3 steht. Besonders bevorzugt werden dabei solche Verbindungen, in denen R¹⁴ eine C₁- bis C₈-Alkylgruppe oder eine 5- bis 7-gliedrige Cycloalkylgruppe, sowie R¹⁵ eine C₁- bis C₄-Alkylgruppe bedeutet und p für die Zahlen 1 oder 2 steht.

Unter diesen Verbindungen sind insbesondere Dimethoxydiisopropyl-Dimethoryisobutylisopropylsilan, Dimethoxydiisobutylsilan, Dimethoxydicyclopentylsilan, Diethoryisobutylisopropylsilan und Dimethoxyisopropylsek.butylsilan hervorzuheben.

Bevorzugt werden solche Katalysatorsysteme verwendet, bei denen das Atomverhältnis zwischen Aluminium aus der Aluminiumverbindung und Titan aus der titanhaltigen Feststoffkomponente 10:1 bis 800:1, insbesondere 20:1 bis 200:1, und das Molverhältnis zwischen der Aluminiumverbindung und der als Cokatalysator eingesetzten Elektronendonorverbindung 1:1 bis 100:1, insbesondere 2:1 bis 80:1 beträgt. Die einzelnen Katalysatorbestandteile können in beliebiger Reihenfolge einzeln oder als Gemisch zweier Komponenten in das Polymerisationssystem eingebracht werden.

Weitere geeignete Katalysatorsysteme zur Herstellung der teilkristallinen Propylen-Homopolymerisate A) sind Katalysatorsysteme, die als aktive Bestandteile von der Formel I und II verschiedene Metallocenkomplexe von Metallen der IV. oder V. Nebengruppe des Periodensystems und oligomere Aluminiumoxidverbindung enthalten. Bevorzugt sind dabei Metallocenkomplexe von Titan, Zirkonium, Hafnium, Vanadium, Niob oder Tantal. Vorzugsweise werden dabei solche Komplexverbindungen verwendet, bei denen das Metallatom über π-Bindungen mit ungesättigten cyclischen Kohlenwasserstoffresten verbunden ist, beispielsweise Cyclopentadienyl-, Fluorenyl- oder Indenylgruppen. Weiterhin sind die bevorzugt eingesetzten Komplexverbindungen dadurch gekennzeichnet, daß das Metallatom noch mit weiteren Liganden, insbesondere mit Fluor, Chlor, Brom und lod oder einem C₁- bis C₁₀-Alkyl, beispielsweise einer Methyl-, Ethyl-, Propyl- oder Butylgruppe, verknüpft sein kann.

Besonders geeignete Metallocenkomplexe lassen sich durch folgende allgemeine Formel V kennzeichnen: 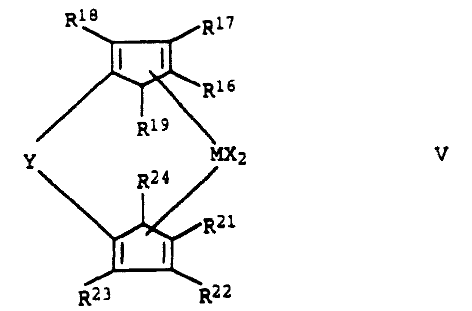 in der die Substituenten folgende Bedeutung haben:
- M: Titan, Zirkonium, Hafnium, Vanadium, Niob oder Tantal,
- X: Fluor, Chlor, Brom, Iod, Wasserstoff, C₁- bis C₁₀-Alkyl, C₆- bis C₁₅-Aryl oder -OR²⁰,
- wobei R²⁰: C₁- bis C₁₀-Alkyl, C₆- bis C₁₅-Aryl, Alkylaryl, Arylalkyl, Fluoralkyl oder Fluoraryl mit jeweils 1 bis 10 C-Atomen im Alkylrest und 6 bis 20 C-Atomen im Arylrest bedeutet,
- R¹⁶ bis R¹⁹: und R²¹ bis R²⁴ Wasserstoff, C₁- bis C₁₀-Alkyl, 5-bis 7-gliedriges Cycloalkyl, das seinerseits C₁- bis C₁₀-Alkyle als Substituenten tragen kann, C₆- bis C₁₅-Aryl oder Arylalkyl, wobei gegebenenfalls auch zwei benachbarte Reste gemeinsam für 4 bis 15 C-Atome aufweisende cyclische gesättigte, teilweise gesattigte oder ungesättigte Gruppen stehen können, oder Si(R²⁵)₃ mit
- R²⁵: C₁- bis C₁₀-Alkyl, C₆- bis C₁₅-Aryl oder C₃- bis C₁₀-Cycloalkyl,
- Y: für R²⁶R²⁷Z〈 oder 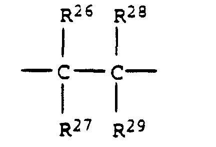 steht,
- wobei Z: Silicium, Germanium, Zinn oder Kohlenstoff bedeutet,
- R²⁶, R²⁷, R²⁸, R²⁹: Wasserstoff, C₁- bis C₁₀-Alkyl, C₃- bis C₁₀-Cycloalkyl oder C₆- bis C₁₅-Aryl, wobei gegebenenfalls auch zwei benachbarte Reste gemeinsam für 4 bis 15 C-Atome aufweisende cyclische Gruppen stehen können.

Von den Verbindungen der Formel V sind diejenigen besonders geeignet, in denen
- R¹⁶ und 21: gleich sind und für Wasserstoff oder C₁- bis C₁₀-Alkylgruppen stehen,
- R¹⁹ und R²⁴: gleich sind und für Wasserstoff, eine Methyl-, Ethyl-, iso-Propyl- oder tert.-Butylgruppe stehen,
- R¹⁷, R¹⁸, R²²: und R²³ die Bedeutung
R¹⁸ und R²³ C₁- bis C₄-Alkyl
R¹⁷ und R²² Wasserstoff
haben oder zwei benachbarte Reste R¹⁷ und R¹⁸ sowie R²² und R²³ gemeinsam für 4 bis 12 C-Atome aufweisende cyclische Gruppen stehen,
- R²⁶,R²⁷,R²⁸ und R²⁹: für Wasserstoff oder C₁- bis C₈-Alkyl,
- M: für Zirkonium oder Hafnium und
- X: für Chlor stehen.

Beispiele für besonders geeignete Komplexverbindungen sind u.a.
Dimethylsilandiylbis(cyclopentadienyl)-zirkoniumdichlorid,
Dimethylsilandiylbis(indenyl)-zirkoniumdichlorid,
Dimethylsilandiylbis(tetrahydroindenyl)-zirkoniumdichlorid,
Ethylenbis(cyclopentadienyl)-zirkoniumdichlorid,
Ethylenbis(indenyl)-zirkoniumdichlorid,
Ethylenbis(tetrahydroindenyl)-zirkoniumdichlorid,
Ethylenbis(-2-methylindenyl)-zirkoniumdichlorid,
Ethylenbis(-2-methylindenyl)-hafniumdichlorid,
Ethylenbis(-2-methylbenzindenyl)-zirkoniumdichlorid,
Ethylenbis(-2-methylbenzindenyl)-hafniumdichlorid,
Dimethylsilandiylbis(-3-tert.butyl-5-methylcyclopentadienyl)zirkoniumdichlorid,
Dimethylsilandiylbis(-3-tert.butyl-5-ethylcyclopentadienyl)zirkoniumdichlorid,
Dimethylsilandiylbis(-3-tert.butyl-5-methylcyclopentadienyl)dimethylzirkonium,
Dimethylsilandiylbis(-2-methylindenyl)-zirkoniumdichlorid,
Dimethylsilandiylbis(-2-isopropylindenyl)-zirkoniumdichlorid,
Dimethylsilandiylbis(-2-tert.-butylindenyl)-zirkoniumdichlorid,
Diethylsilandiylbis(-2-methylindenyl)-zirkoniumdibromid,
Dimethylsilandiylbis(-2-methyl-5-methylcyclopentadienyl)zirkoniumdichlorid,
Dimethylsilandiylbis(-2-ethyl-5-isopropylcyclopentadienyl)zirkoniumdichlorid,
Dimethylsilandiylbis(-2-methylbenzindenyl)-zirkoniumdichlorid,
Dimethylsilandiylbis(-2-methylindenyl)-hafniumdichlorid und Isopropylidencyclopentadienylfluorenylzirkoniumdichlorid.

Die Synthese derartiger Komplexverbindungen kann nach an sich bekannten Methoden erfolgen, wobei die Umsetzung der entsprechend substituierten, cyclischen Kohlenwasserstoffanionen mit Halogeniden von Titan, Zirkonium, Hafnium, Vanadium, Niob oder Tantal, bevorzugt ist. Beispiele für entsprechende Herstellungsverfahren sind u.a. im Journal of Organometallic Chemistry, 369 (1989), 359-370 beschrieben.

Die Metallocenkomplexe können auch in kationischer Form vorliegen, wie in der EP-A 277 003 und der EP-A 277 004 beschrieben wird. Weiterhin kann auch µ-Oxo-bis-(chlorobiscyclopentadienyl)zirkonium als Metallocenkomplex verwendet werden.

Neben den Metallocenkomplexen enthalten die eingesetzten Katalysatorsysteme noch oligomere Aluminiumoxidverbindungen. Geeignet sind beispielsweise offenkettige oder cyclische Alumoxanverbindungen der allgemeinen Formeln VI oder VII 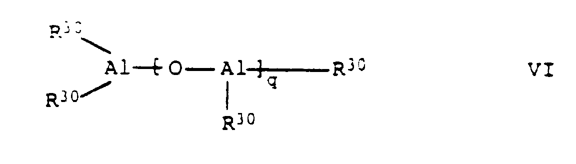 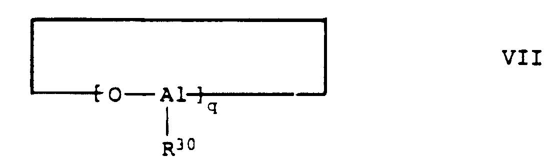 wobei R³⁰ eine C₁- bis C₄-Alkylgruppe, bevorzugt eine Methyl- oder Ethylgruppe bedeutet und q für eine ganze Zahl von 5 bis 30, bevorzugt 10 bis 25, steht.

Die Herstellung dieser oligomeren Alumoxanverbindungen erfolgt üblicherweise durch Umsetzung einer Lösung von Trialkylaluminium mit Wasser und ist u.a. in der EP-A 284 708 und der US-A 4 794 096 beschrieben.

In der Regel liegen die dabei erhaltenen oligomeren Alumoxanverbindungen als Gemische unterschiedlich langer, sowohl linearer als auch cyclischer Kettenmoleküle vor, so daß q als Mittelwert anzusehen ist. Die Alumoxanverbindungen können auch im Gemisch mit anderen Metallalkylen, bevorzugt mit Aluminiumalkylen, vorliegen.

Es hat sich als vorteilhaft erwiesen, die Komplexverbindung von Metallen der IV. und V. Nebengruppe des Periodensystems und die oligomere Alumoxanverbindung in solchen Mengen zu verwenden, daß das atomare Verhältnis zwischen Aluminium aus der oligomeren Alumoxanverbindung und dem Übergangsmetall aus der Komplexverbindung von Metallen der IV. und V. Nebengruppe des Periodensystems im Bereich von 10:1 bis 10⁶:1, insbesondere im Bereich von 10:1 bis 10⁴:1, liegt.

Als Lösungsmittel für diese Katalysatorsysteme werden übliche aromatische Kohlenwasserstoffe eingesetzt, bevorzugt mit 6 bis 20 C-Atomen, insbesondere Xylole und Toluol sowie deren Mischungen.

Weiterhin können auch geträgerte Metallocenkomplexe verwendet werden. Geeignete Trägermaterialien sind beispielsweise Kieselgele, bevorzugt solche der Formel SiO₂ · a Al₂O₃, worin a für eine Zahl im Bereich von 0 bis 2 steht, vorzugsweise 0 bis 0,5; also im wesentlichen Alumosilikate oder Siliciumdioxid. Vorzugsweise weisen die Träger einen Teilchendurchmesser im Bereich von 1 bis 200 µm auf, insbesondere von 30 bis 80 µm. Derartige Produkte sind im Handel erhältlich, z.B. als Silica Gel 332 der Firma Grace.

Als Katalysatorsysteme zur Herstellung von Propylen-Homopolymerisate B) eignen sich solche, die als aktive Bestandteile einen Metallocenkomplex der allgemeinen Formel I oder II 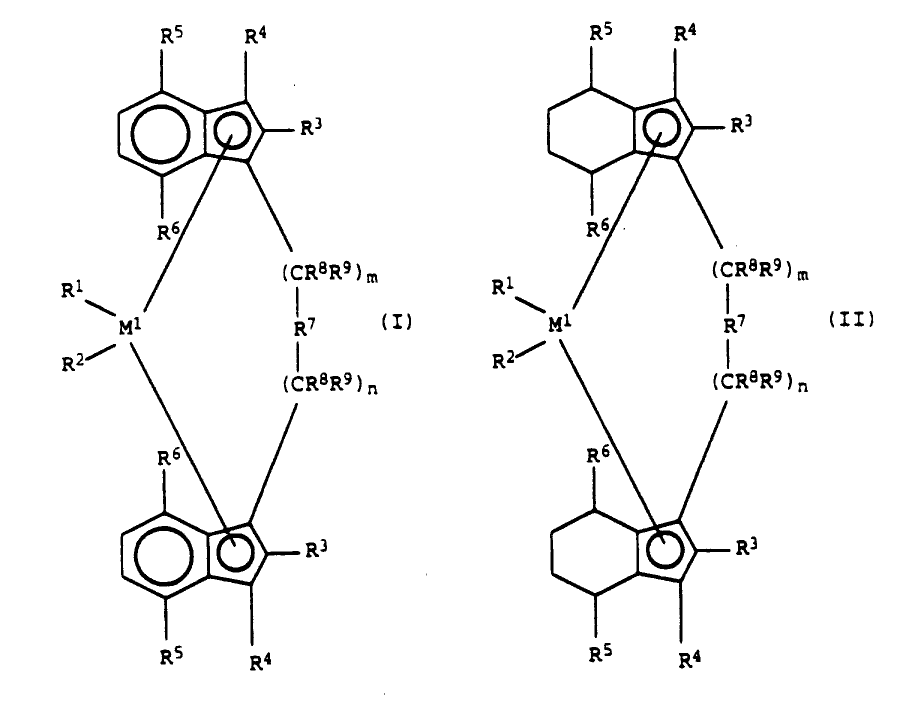 worin
- M¹: ein Metall der Gruppe IVb, Vb oder Vlb des Periodensystems ist,
- R¹ und R²: gleich oder verschieden sind und ein Wasserstoffatom, eine C₁-C₁₀-Alkylgruppe, eine C₁-C₁₀-Alkoxygruppe, eine C₆-C₁₀-Arylgruppe, eine C₆-C₁₀-Aryloxygruppe, eine C₂-C₁₀-Alkenylgruppe, eine C₇-C₄₀-Arylalkylgruppe, eine C₇-C₄₀-Alkylarylgruppe, eine C₈-C₄₀-Arylalkenylgruppe oder ein Halogenatom bedeuten,
- R³ und R⁴: gleich oder verschieden sind und ein Wasserstoffatom, ein Halogenatom, eine C₁-C₁₀-Alkylgruppe, die halogeniert sein kann, eine C₆-C₁₀-Arylgruppe, einen -NR₂¹⁰, -SR¹⁰, -OSiR₃¹⁰ -SiR₃¹⁰ oder -PR₂¹⁰-Rest bedeuten, worin R¹⁰ ein Halogenatom, eine C₁-C₁₀-Alkylgruppe oder eine C₆-C₁₀-Arylgruppe ist,
- R⁵ und R⁶: gleich oder verschieden sind und die für R³ und R⁴ genannte Bedeutung haben, mit der Maßgabe, daß R⁵ und R⁶ nicht Wasserstoff sind.
- R⁷: 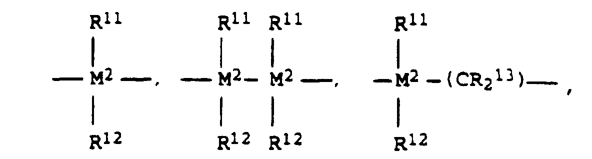 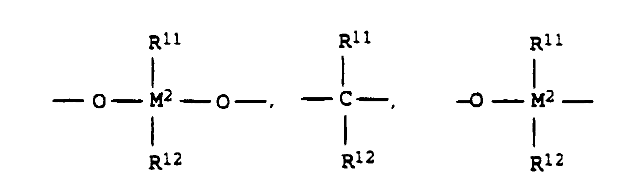 =BR¹¹, =AIR¹¹, -Ge-, -Sn-, -O-, -S-, =SO, =SO₂, -NR¹¹, =CO, =PR¹¹ oder =P(O)R¹¹ ist,
wobei
- R¹¹, R¹² und R¹³: gleich oder verschieden sind und ein Wasserstoffatom, ein Halogenatom, eine C₁-C₁₀-Alkylgruppe, C₁C₁₀-Fluoralkylgruppe, eine C₆C₁₀-Arylgruppe, eine C₆-C₁₀-Fluorarylgruppe, eine C₁-C₁₀-Alkoxygruppe, eine C₂-C₁₀-Alkenylgruppe, eine C₇-C₄₀-Arylalkylgruppe, eine C₈-C₄₀-Arylalkenylgruppe, eine C₇C₄₀-Alkylarylgruppe bedeuten oder R¹¹ und R¹² oder R¹¹ und R¹³ jeweils mit den sie verbindenden Atomen einen Ring bilden,
- M²: Silizium, Germanium oder Zinn ist,
- R⁸ und R⁹: gleich oder verschieden sind und die für R¹¹ genannte Bedeutung haben und
- m und n: gleich oder verschieden sind und null, 1 oder 2 sind, wobei m plus n null, 1 oder 2 ist.

Alkyl steht für geradkettiges oder verzweigtes Alkyl. Halogen (halogeniert) bedeutet Fluor, Chlor, Brom oder Jod, bevorzugt Fluor oder Chlor.

Bevorzugte Verbindungen der allgemeinen Formel I und II sowie Verfahren zur ihrer Herstellung sind in der EP-A 537 686 beschrieben.

Neben den Metallocenkomplexen der allgemeinen Formel I oder II enthalten die eingesetzten Katalysatorsysteme noch oligomere Aluminiumoxidverbindungen der vorstehend genannten allgemeinen Formeln VI oder VII. Bezüglich der Mengenverhältnisse der aktiven Bestandteile gilt das bei der Herstellung der Propylen-Homopolymerisate A) Gesagte. Die Metallocenkomplexe der allgemeinen Formel I oder II können ebanfalls in geträgerter Form verwendet werden, wobei die gleichen oder selben Träger wie bei der Herstellung der Propylen-Homopolymerisate A) bevorzugt sind.

Die Herstellung der erfindungsgemäßen Propylenpolymerisate kann in Suspension, in flüssigen Monomeren, in inerten Lösungsmitteln und insbesondere in der Gasphase erfolgen. Die Polymerisationsbedingungen sind an sich unkritisch, Drücke von 0,5 bis 3000 bar, bevorzugt 1 bis 80 bar und Temperaturen von -50 bis +300°C, bevorzugt -20 bis 100°C haben sich als geeignet erwiesen. Die mittlere Molmasse der gebildeten Polymerisate kann mit den in der Polymerisationstechnik üblichen Methoden gesteuert werden, beispielsweise durch Veranderung der Reaktionstemperaturen oder durch Zufuhr von Reglern wie wasserstoff oder C₂- bis C₈-Alk-1-enen, wodurch im erfindungsgemäßen Propylenpolymerisat geringe Mengen jedoch nicht mehr als 0,5 Gew.-%, insbesondere nicht mehr als 0,2 Gew.-%, an C₂- bis C₈-Alk-1-enen gefunden werden kann.

Nach dem zu den erfindungsgemäßen Propylenpolymerisaten führenden bevorzugten Verfahren werden die einzelnen Katalysatorsysteme entsprechend ihrer jeweiligen Polymerisationsaktivitaten in solchen Mengenverhältnissen eingesetzt, daß die gewünschte Polymerzusammensetzung gebildet wird.

Die erfindungsgemäßen Propylenpolymerisate enthalten die Komponente A) in einer Menge von 30 bis 95 Gew.-% und die Komponente B) in einer Menge von 5 bis 70 Gew.-%.

Bevorzugte Propylen-Homopolymerisate A) weisen einen Schmelzpunkt im Bereich von 135 bis 165°C auf und eine Glastemperatur, die größer als -5°C ist.

Bevorzugte Propylen-Homopolymerisate B) sind teilkristallin und weisen einen Schmelzpunkt unter 125 °C auf und eine Glastemperatur, die kleiner als -15°C ist.

Die erfindungsgemäßen Propylenpolymerisate zeichnen sich durch ein ausgewogenes Eigenschaftsprofil, insbesondere durch gute Kälteschlagzähigkeit aus. Durch den Einsatz eines Monomeren werden verfahrenstechnische Vorteile erzielt, ebenso dadurch, daß das Verfahren zur Herstellung der erfindungsgemäßen Propylenpolymerisate in einer Reaktionszone durchgeführt werden kann. Die erfindungsgemäßen Propylenpolymerisate lassen sich gut verarbeiten, sind in vielen Bereichen verwendbar und eignen sich insbesondere zur Herstellung von Fasern, Folien und Formkörpern.

### Beispiele

### Beispiel 1

### 1.1 Herstellung eines Trägermaterials

Zu einer Suspension von 20,2 g Kieselgel (Fa. Grace, SG 332, Teilchendurchmesser 20-45 µm) in 200 ml Heptan wurden bei Raumtemperatur während 30 min 56 ml einer Lösung von 6,4 g Triethylaluminium in 48 ml Heptan zugetropft. Dabei stieg die Temperatur auf 44°C an. Nach 18 h Rühren bei Raumtemperatur wurde abfiltriert, zweimal mit je 30 ml Heptan und zweimal mit je 30 ml Pentan gewaschen und anschließend am Ölpumpenvakuum getrocknet.

### 1.2 Trägerung der Katalysatorsysteme

Zu einer Lösung aus 30 ml Toluol, 40 µmol Dimethylsilandiyl-bis(2-methylbenzo[e]indenyl)zirkondichlorid(≙ 23 mg) und 25 µmol rac[1,2-Ethandiylbis{1-(4,7-dimethyl-4,5,6,7-tetrahydroindenyl)}]zirkondichlorid(≙ 12 mg) wurden 17 ml (≙ 26 mmol) einer Lösung von Methylalumoxan in Toluol (1,53 molar, Fa. Witco) gegeben und 15 Minuten gerührt. Anschließend wurden 5 g des in 1.1 hergestellten Trägermaterials zugegeben und weitere 30 Minuten gerührt. Zuletzt wurde das Lösungsmittel bei Raumtemperatur während 4 Stunden am Ölpumpenvakuum entfernt. Es entstand ein gut rieselfähiges Katalysatorpulver aus zwei Metallocen-Katalysatorsystemen.

### 1.3 Polymerisation

In einem trockenen, mit Stickstoff gespülten 10-Liter-Autoklaven wurden nacheinander 20 g Polypropylengrieß und 12 ml Triethylaluminium (1 molare Lösung in Heptan) gegeben und 15 min gerührt. Anschließend wurden 1,5 g des in 1.2 hergestellten Trägerkatalysators im Stickstoff-Gegenstrom in den Reaktor gefüllt und dieser verschlossen. Bei einer Rührerdrehzahl von 350 U/min wurde auf 70°C aufgeheizt und gleichzeitig der Innendruck stufenweise durch Propylenzufuhr bis zum Enddruck von 28 bar erhöht. Anschließend wurde 1,5 h polymerisiert, wobei durch die automatische Druckregelung Frischpropylen nachgeführt wurde. Nach beendeter Reaktion wurde während 10 min auf Atmosphärendruck entspannt und das entstandene Polymere, welches aus zwei unterschiedlichen Propylenhomopolymerisaten bestand, im Stickstoffstrom ausgetragen. Die entsprechenden Polymerisationsergebnisse sind in der Tabelle aufgelistet.

### Beispiel 2

### 2.1 Metallocenhaltiges Katalysatorsystem der Formel (II)

Entsprechend dem im Beispiel 1.2 beschriebenen Verfahren wurden 60 µmol rac[1,2-Ethandiyl-bis{1-(4,7-dimethyl-4,5,6,7-tetrahydroindenyl)}]zirkondichloric (29 mg) und 16 ml (24 mmol) einer 1,53 molaren Lösung von Methylalumoxan in Toluol eingesetzt.

### 2.2 Ziegler-Natta-Katalysatorsystem

20 g SiO₂ ("SG 332" der Firma Grace mit einem Teilchendurchmesser von 20 bis 45 µm) wurden in 200 ml n-Heptan suspendiert und bei 20°C mit 25,33 ml n-Butyl-n-Octyl-Magnesium versetzt. Die Suspension wurde bis zum Rückfluß erhitzt und 30 Minuten lang auf Rückfluß gehalten. Nach anschließendem Abkühlen der Suspension auf Raumtemperatur wurde beginnend bei 60°C zwei Stunden lang mit überschüssigem HCI chloriert und danach wurden bei Raumtemperatur 19,41 ml Ethanol hinzugefügt. Das Gemisch wurde zunächst 30 Minuten am Rückfluß gehalten und nach erneutem Abkühlen auf 25°C mit 17,07 ml Titantetrachlorid versetzt, anschließend erneut auf 60°C erhitzt und bei dieser Temperatur mit 2,94 ml Di-n-butylphthalsäureester versetzt. Das Gemisch wurde eine Stunde lang am Rückfluß gehalten. Die daraus resultierende Suspension wurde filtriert und mit 160 ml Ethylbenzol gewaschen. Nach Trocknung erhielt man 29,2 g der Katalysatorvorstufe.

Die erhaltene Katalysatorvorstufe wurde in einer heizbaren Extraktionsfritte unter Rühren 60 Minuten lang mit einem Gemisch aus 450 ml Ethylbenzol und 50 ml Titantetrachlorid bei einer Manteltemperatur von 125°C extrahiert. Der Katalysator wurde anschließend dreimal mit jeweils 120 ml n-Hexan und einmal mit 120 ml n-Pentan gewaschen und im Stickstoffstrom getrocknet. Der Katalysator enthielt 2,0 Gew.-% Magnesium.

Die titanhaltige Feststoffkomponente wurde danach zunächst einer Vorpolymerisation unterworfen und anschließend inaktiviert. Dazu wurden in einem mit einem Rührer versehenen 1 I-Glasautoklaven 700 ml n-Heptan vorgelegt und das Reaktionsgefäß auf eine Innentemperatur von 5°C abgekühlt. Zu dem Lösungsmittel wurden 47,4 ml Triethylaluminium (in Form einer 1,0-molaren Lösung in n-Heptan) und 6,26 ml Dimethoxyisobutylisopropylsilan (in Form einer 1,0-molaren Lösung in n-Heptan) zugegeben. Anschließend wurden 20 g der hergestellten titanhaltigen Feststoffkomponente zugegeben. Unter Rühren wurde dann kontinuierlich über ein Einleitungsrohr eine Stunde lang gasförmiges Propylen (Durchflüßmenge: 40 l/h) bei einem Druck von 1 bar eingeleitet. Während der Propylenzuführ wurde die Innentemperatur zwischen 5°C und 20°C gehalten. Nach erfolgter Propylenzufuhr wurde dann kontinuierlich unter Rühren über ein Einleitungsrohr 1 h lang gasförmiges, trockenes CO₂ (Durchflußmenge: 14,5 l/h bei einem Druck von 1 bar) in die Katalysatorsuspension eingeleitet. Dadurch wurde die polymerisationsaktive Katalysatorsuspension inaktiviert.

Man erhielt 90 g eines Feststoffes, der 3,1 Gewichtsteile Polypropylen auf ein Gewichtsteil Katalysatorfeststoff enthielt.

Der dabei resultierende Feststoff ist das Ziegler-Natta-Katalysatorsystem.

### 2.3 Polymerisation

Die Polymerisation des Propylens wurde analog dem Beispiel 1.3 in einer Reaktionszone in Anwesenheit von 1,3 g des nach dem Beispiel 2.2 hergestellten Ziegler-Natta-Katalysatorsystems und 0,5 g des im Beispiel 2.1 beschriebenen metallocenhaltigen Katalysatorsystems durchgeführt. Die entsprechenden Polymerisationsergebnisse sind in der Tabelle aufgeführt.

### Beispiel 3

### 3.1 Trägerung der Katalysatorsysteme

Analog zu dem in 1.2 beschriebenen Verfahren wurden 25 µmol rac[1,2-Ethandiylbis{1-(4,7-dimethyl-4,5,6,7-tetrahydroindenyl)}]zirkondichlorid(≙ 12 mg) in 20 ml Toluol gelöst und zu 6,5 ml (≙ 10 mmol) einer Lösung von Methylalumoxan in Toluol (1,53 molar, Fa. Witco) gegeben und 15 Minuten gerührt. Anschließend wurden 5 g des in 2.2 hergestellten Ziegler-Natta-Katalysatorsystems zugegeben und weitere 30 Minuten gerührt. Zuletzt wurde das Lösungsmittel bei Raumtemperatur während 4 Stunden am Ölpumpenvakuum entfernt. Es entstand ein gut rieselfähiges Katalysatorpulver aus einem Ziegler-Natta- und einem Metallocen-Katalysatorsystem.

### 3.2 Polymerisation

Die Polymerisation wurde mit 1,5 g des in 3.1 hergestellten Trägerkatalysators analog zu dem in 1.3 beschriebenen Verfahren durchgeführt. Die entsprechenden Polymerisationsergebnisse sind in der Tabelle aufgeführt.

Die Schmelzpunkte und Glastemperaturen der erhaltenen Propylenpolymerisate wurden mittels DSC-Messungen (10°C/1 min Aufheizrate) bestimmt. Bei allen Proben wurden jeweils zwei Schmelzpunkte und zwei Glastemperaturen gefunden, die jeweils den beiden Komponenten A) und B) zugeordnet werden konnten.

Der G-Modul wurde nach DIN 53 445 und die Charpy-Schlagzähigkeiten an nach DIN 53 453 bestimmt.

Die Produktivitäten [g/g Kat·h] beziehen sich auf die Gesamtmenge des Katalysators, also auf die Summe der Menge der beiden unterschiedlichen Katalysatorsysteme.

Die Trennung nach TREF (Temperature Rising Elution Fractionation) diente dazu, die jeweiligen Anteile der Propylen-Homopolymerisate A) [gebildet am Ziegler-Natta-Katalysatorsystem oder am metallocenhaltigen Katalysatorsystem, das von dem der Formel (I) oder (II) verschieden ist] und der des Propylen-Homopolymerisats B) [gebildet am metallocenhaltigen Katalysatorsystem der Formel (I) oder (II)] zu ermitteln. Dazu wurden mit Hilfe von Xylol bei unterschiedlichen, steigenden Temperaturen Fraktionen aus dem gesamten Propylenpolymerisat herauseluiert. Die Fraktion, die man bei 80°C erhielt, entsprach dem Propylen-Homopolymerisat B), die gesammelte Fraktion, die man bei 100°C und 130°C eluierte, dem Propylen-Homopolymerisat A) (US-A 50 30 713; L. Wild "Advances in Polymer Science" 98, Seite 1-47, 1990).

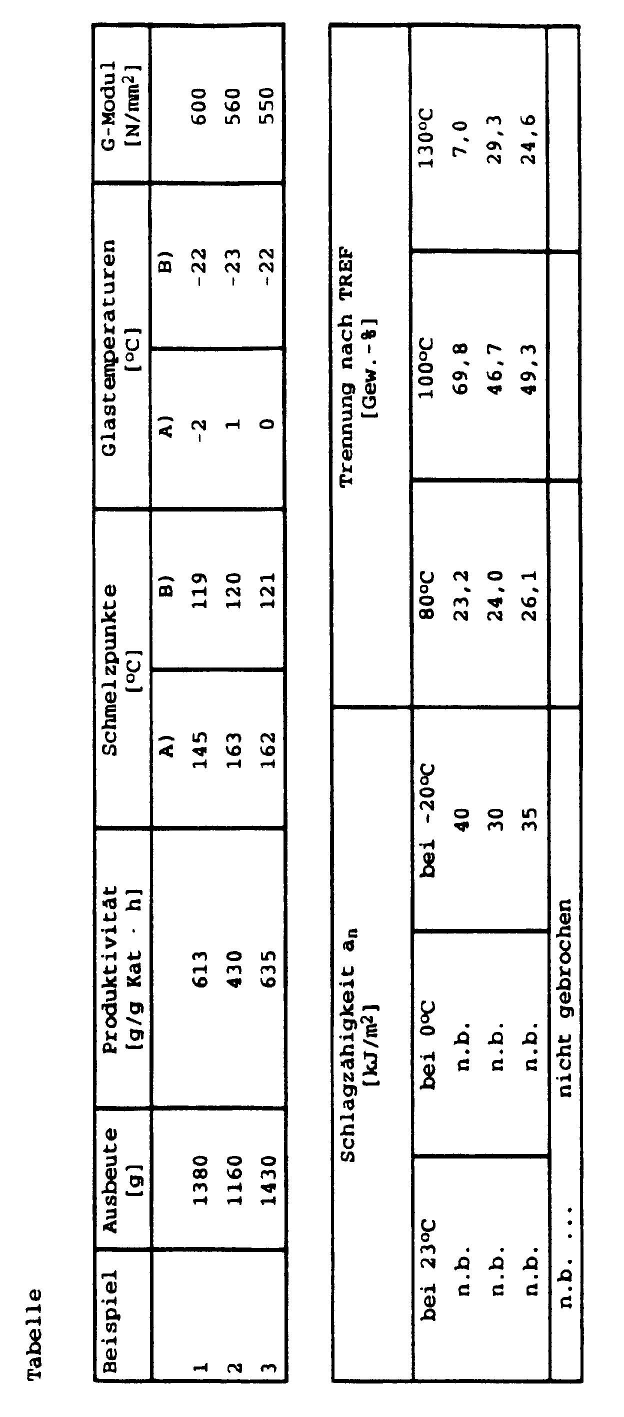

## Patentansprüche

1. Propylenpolymerisate, enthaltend
A) von 30 bis 95 Gew.-% eines teilkristallinen Propylen-Homopolymerisats mit einem Schmelzpunkt im Bereich von 125°C bis 165°C und einer Glastemperatur, die größer als -10°C ist
und
B) von 5 bis 70 Gew.-% eines teilkristallinen Propylen-Homopolymerisats mit einem Schmelzpunkt unter 130°C und einer Glastemperatur, die kleiner als oder gleich -10°C ist oder ein nicht kristallisierendes Propylen-Homopolymerisat mit einer Glastemperatur, die kleiner als oder gleich -10°C ist.

2. Propylenpolymerisate nach Anspruch 1, dadurch erhältlich, daß das Propylen-Homopolymerisat B) unter Verwendung eines Katalysatorsystems, das als aktive Bestandteile einen Metallocenkomplex der allgemeinen Formel I oder II 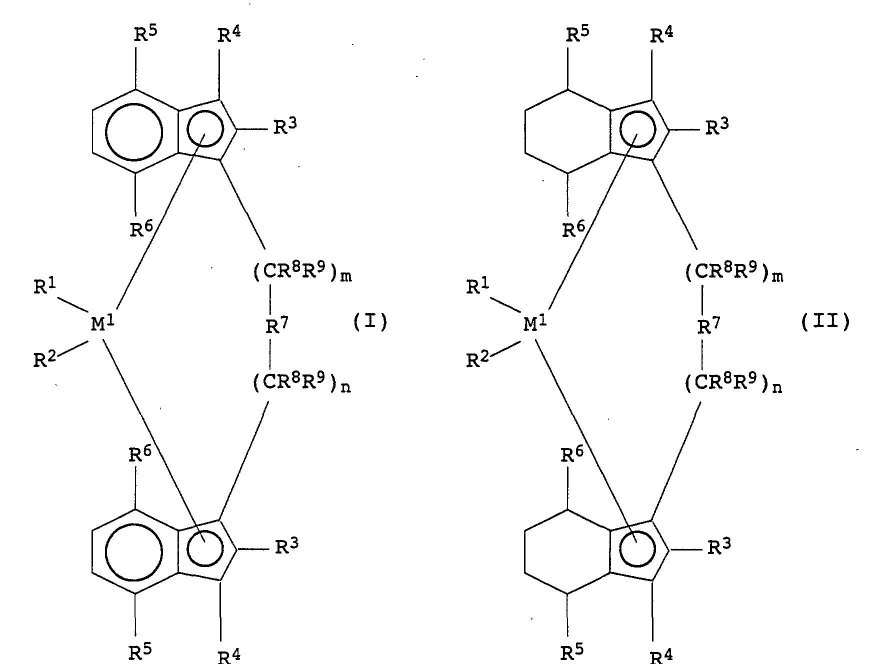 worin
M¹ ein Metall der Gruppe IVb, Vb oder VIb des Periodensystems ist,
R¹ und R² gleich oder verschieden sind und ein Wasserstoffatom, eine C₁-C₁₀-Alkylgruppe, eine C₁-C₁₀-Alkoxygruppe, eine C₆-C₁₀-Arylgruppe, eine C₆-C₁₀-Aryloxygruppe, eine C₂-C₁₀-Alkenylgruppe, eine C₇-C₄₀-Arylalkylgruppe, eine C₇-C₄₀-Alkylarylgruppe, eine C₈-C₄₀-Arylalkenylgruppe oder ein Halogenatom bedeuten,
R³ und R⁴ gleich oder verschieden sind und ein Wasserstoffatom, ein Halogenatom, eine C₁-C₁₀-Alkylgruppe, die halogeniert sein kann, eine C₆-C₁₀-Arylgruppe, einen -NR₂¹⁰, -SR¹⁰, -OSiR₃¹⁰ -SiR₃¹⁰ oder -PR₂¹⁰-Rest bedeuten, worin R¹⁰ ein Halogenatom, eine C₁-C₁₀-Alkylgruppe oder eine C₆-C₁₀-Arylgruppe ist,
R⁵ und R⁶ gleich oder verschieden sind und die für R³ und R⁴ genannte Bedeutung haben, mit der Maßgabe, daß R⁵ und R⁶ nicht Wasserstoff sind.
R⁷ 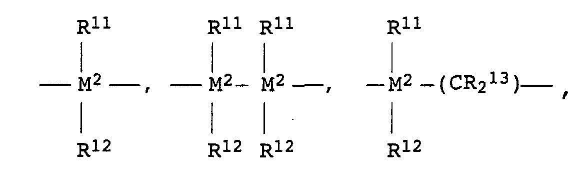 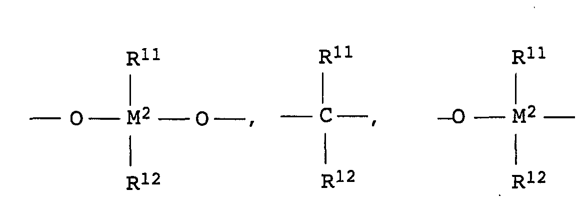 =BR¹¹, =AlR¹¹, -Ge-, -Sn-, -O-, -S-, =SO, =SO₂, =NR¹¹, =CO, =PR¹¹ oder =P(O)R¹¹ ist,
wobei
R¹¹, R¹² und R¹³ gleich oder verschieden sind und ein Wasserstoffatom, ein Halogenatom, eine C₁-C₁₀-Alkylgruppe, C₁-C₁₀-Fluoralkylgruppe, eine C₆-C₁₀ Arylgruppe, eine C₆-C₁₀-Fluorarylgruppe, eine C₁-C₁₀-Alkoxygruppe, eine C₂-C₁₀-Alkenylgruppe, eine C₇-C₄₀-Arylalkylgruppe, eine C₈-C₄₀-Arylalkenylgruppe, eine C₇-C₄₀-Alkylarylgruppe bedeuten oder R¹¹ und R¹² oder R¹¹ und R¹³ jeweils mit den sie verbindenden Atomen einen Ring bilden,
M² Silizium, Germanium oder Zinn ist,
R⁸ und R⁹ gleich oder verschieden sind und die für R¹¹ genannte Bedeutung haben und
m und n gleich oder verschieden sind und null, 1 oder 2 sind, wobei m plus n null, 1 oder 2 ist,
und eine oligomere Aluminiumoxidverbindung enthält,
hergestellt wird.

3. Propylenpolymerisate nach den Ansprüchen 1 bis 2, dadurch erhältlich, daß das Propylen-Homopolymerisat A) unter Verwendung eines Ziegler-Natta-Katalysatorsystems hergestellt wird.

4. Propylenpolymerisate nach den Ansprüchen 1 bis 2, dadurch erhältlich, daß das Propylen-Homopolymerisat A) unter Verwendung eines Katalysatorsystems, das als aktive Bestandteile von der Formel I und II verschiedene Metallocenkomplexe von Metallen der IV. oder V. Nebengruppe des Periodensystems und oligomere Aluminiumoxidverbindung enthält, hergestellt wird.

5. Verfahren zur Herstellung von Propylenpolymerisaten gemäß den Ansprüchen 1 bis 4, **dadurch gekennzeichnet, daß** die Herstellung der Komponenten A) und B) zusammen, in Anwesenheit zweier unterschiedlicher, in den Ansprüchen 2 bis 4 beschriebener Katalysatorsysteme, in einer Reaktionszone erfolgt.

6. Verfahren zur Herstellung von Propylenpolymerisaten nach Anspruch 5, **dadurch gekennzeichnet, daß** man in der Gasphase arbeitet.

7. Verwendung von Propylenpolymerisaten gemäß den Ansprüchen 1 bis 6 zur Herstellung von Fasern, Folien und Formkörpern.

8. Fasern, Folien und Formkörper, erhältlich aus den Propylenpolymerisaten gemäß den Ansprüchen 1 bis 6 als wesentliche Komponente.

## Claims

1. A propylene polymer containing
A) from 30 to 95% by weight of a semicrystalline propylene homopolymer having a melting point of 125 to 165°C and a glass transition temperature which is greater than -10°C
and
B) from 5 to 70% by weight of a semicrystalline propylene homopolymer having a melting point below 130°C and a glass transition temperature which is less than or equal to -10°C or a non-crystallizing propylene homopolymer having a glass transition temperature which is less than or equal to -10°C.

2. A propylene polymer as claimed in claim 1, obtainable by preparing the propylene homopolymer B) using a catalyst system which contains, as active components, a metallocene complex of the formula I or II 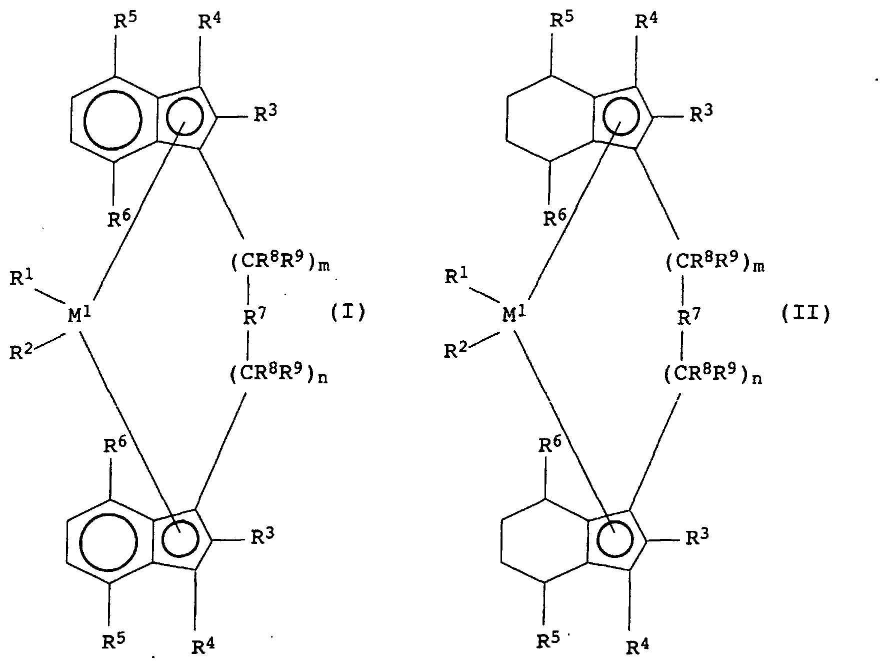 where
M¹ is a metal of group IVb, Vb or VIb of the Periodic Table,
R¹ and R² are identical or different and are each hydrogen, C₁-C₁₀-alkyl, C₁-C₁₀-alkoxy, C₆-C₁₀-aryl, C₆-C₁₀-aryloxy, C₂-C₁₀-alkenyl, C₇-C₄₀-arylalkyl, C₇-C₄₀-alkylaryl, C₈-C₄₀-arylalkenyl or halogen,
R³ and R⁴ are identical or different and are each hydrogen, halogen, C₁-C₁₀-alkyl which may be halogenated, C₆-C₁₀-aryl, -NR₂¹⁰, -SR¹⁰, -OSiR₃¹⁰, -SiR₃¹⁰ or -PR₂¹⁰, where R¹⁰ is halogen, C₁-C₁₀-alkyl or C₆-C₁₀-aryl,
R⁵ and R⁶ are identical or different and have the meaning stated for R³ and R⁴, with the proviso that R⁵ and R⁶ are not hydrogen,
R⁷ is 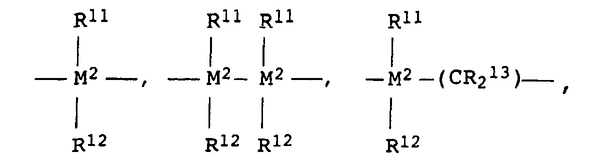 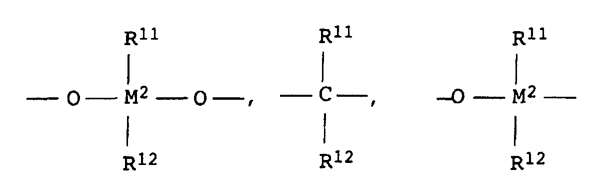 =BR¹¹, =AlR¹¹, -Ge-, -Sn-, -O-, -S-, =SO, =SO₂, =NR¹¹, =CO, =PR¹¹ or =P(O)R¹¹,
R¹¹, R¹² und R¹³ are identical or different and are each hydrogen, halogen, C₁-C₁₀-alkyl, C₁-C₁₀-fluoroalkyl, C₆-C₁₀-aryl, C₆-C₁₀-fluoroaryl, C₁-C₁₀-alkoxy, C₂-C₁₀-alkenyl, C₇-C₄₀-arylalkyl, C₈-C₄₀-arylalkenyl or C₇-C₄₀-alkylaryl or R¹¹ and R¹² or R¹¹ and R¹³ each form a ring with the atoms linking them,
M² is silicon, germanium or tin,
R⁸ and R⁹ are identical or different and each have the meaning stated for R¹¹ and
m and n are identical or different and are each zero, 1 or 2, m plus n being zero, 1 or 2,
and an oligomeric alumina compound.

3. A propylene polymer as claimed in claim 1 or 2, obtainable by preparing the propylene homopolymer A) using a Ziegler-Natta catalyst system.

4. A propylene polymer as claimed in claim 1 or 2, obtainable by preparing the propylene homopolymer A) using a catalyst system which contains, as active components, metallocene complexes of metals of subgroup IV or V of the Periodic Table, which complexes differ from those of the formula I and II, and an oligomeric alumina compound.

5. A process for the preparation of a propylene polymer as claimed in any of claims 1 to 4, wherein components A) and B) are prepared together in one reaction zone in the presence of two different catalyst systems described in any of claims 2 to 4.

6. A process for the preparation of a propylene polymer as claimed in claim 5, which is carried out in the gas phase.

7. The use of a propylene polymer as claimed in any of claims 1 to 6 for the production of fibers, films and moldings.

8. A fiber, film or molding obtainable from a propylene polymer as claimed in any of claims 1 to 6 as the essential component.

## Revendications

1. Polymères de propylène contenant
A) de 30% à 95% en poids d'un homopolymère de propylène partiellement cristallin dont le point de fusion se situe dans la gamme de 125°C à 165°C et dont la température de transition vitreuse est supérieure à -10°C,
et
B) de 5% à 70% en poids d'un homopolymère de propylène partiellement cristallin dont le point de fusion est inférieur à 130°C et dont la température de transition vitreuse est inférieure ou égale à -10°C, ou un homopolymère de propylène qui ne cristallise pas, dont la température de transition vitreuse est inférieure ou égale à -10°C.

2. Polymères de propylène selon la revendication 1, que l'on obtient en préparant l'homopolymère de propylène B) en utilisant un système de catalyseur contenant, en tant que constituants actifs, un complexe de métallocène répondant à la formule générale I ou II 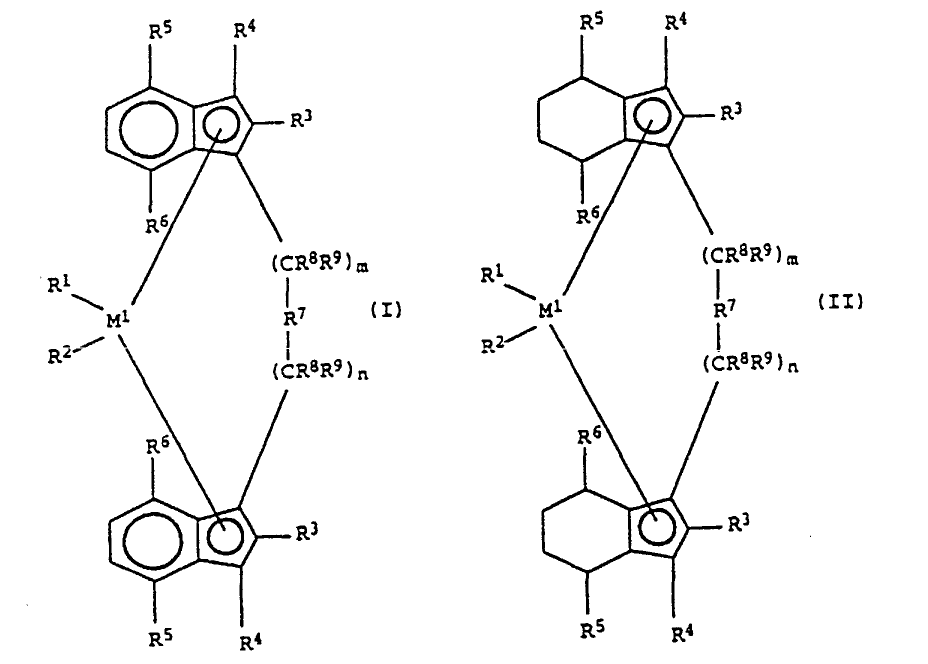 dans lesquelles
M¹ représente un métal du groupe IVb, Vb ou VIb de la Classification Périodique des Eléments,
R¹ et R² sont identiques ou différents et représentent un atome d'hydrogène, un groupe alkyle en C₁ à C₁₀, un groupe alcoxy en C₁ à C₁₀, un groupe aryle en C₆ à C₁₀, un groupe aryl(en C₆ à C₁₀)oxy, un groupe alcényle en C₂ à C₁₀, un groupe arylalkyle en C₇ à C₄₀, un groupe alkylaryle en C₇ à C₄₀, un groupe arylalcényle en C₈ à C₄₀ ou un atome d'halogène,
R³ et R⁴ sont identiques ou différents et représentent un atome d'hydrogène, un atome d'halogène, un groupe alkyle en C₁ à C₁₀ qui peut être halogéné, un groupe aryle en C₆ à C₁₀, un radical -NR₂¹⁰, -SR¹⁰, -OSiR₃¹⁰, -SiR₃¹⁰ ou -PR₂¹⁰, où R¹⁰ représente un atome d'halogène, un groupe alkyle en C₁ à C₁₀ ou un groupe aryle en C₆ à C₁₀,
R⁵ et R⁶ sont identiques ou différents et possèdent la signification mentionnée pour R³ et R⁴, à condition que R⁵ et R⁶ ne représentent pas un atome d'hydrogène,
R⁷ représente : 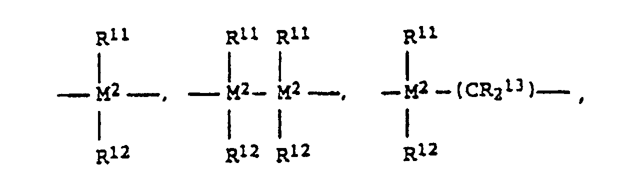 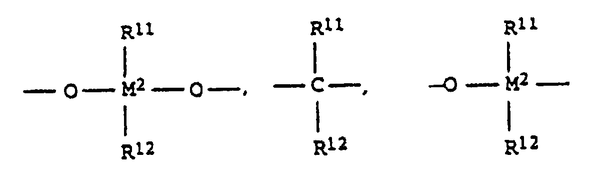 =BR¹¹, =AlR¹¹, -Ge-, -Sn-, -O-, -S-, =SO, =SO₂, =NR¹¹, -CO, =PR¹¹ ou =P(O)R¹¹,
où
R¹¹, R¹² et R¹³ sont identiques ou différents et représentent un atome d'hydrogène, un atome d'halogène, un groupe alkyle en C₁ à C₁₀, un groupe fluoroalkyle en C₁ à C₁₀, un groupe aryle en C₆ à C₁₀, un groupe fluoroaryle en C₆ à C₁₀, un groupe alcoxy en C₁ à C₁₀, un groupe alcényle en C₂ à C₁₀, un groupe arylalkyle en C₇ à C₄₀, un groupe arylalcényle en C₈ à C₄₀, un groupe alkylaryle en C₇ à C₄₀, ou bien R¹¹ et R¹² ou R¹¹ et R¹³ forment chacun un noyau avec les atomes qui les relient,
M² représente un atome de silicium, de germanium ou d'étain,
R⁸ et R⁹ sont identiques ou différents et possèdent la signification mentionnée pour R¹¹, et
m et n sont identiques ou différents et valent zéro, 1 ou 2, la somme de m et de n étant égale à zéro, 1 ou 2,
ainsi qu'un composé d'oxyde d'aluminium oligomère.

3. Polymères de propylène selon les revendications 1 à 2, que l'on obtient en préparant l'homopolymère de propylène A) en utilisant un système de catalyseur Ziegler-Natta.

4. Polymères de propylène selon les revendications 1 à 2, que l'on obtient en préparant l'homopolymère de propylène A) en utilisant un système de catalyseur contenant, en tant que constituants actifs, des complexes de métallocènes à base de métaux du sous-groupe IV ou V de la Classification Périodique des Eléments, différents de ceux répondant aux formules I et II, et un composé d'oxyde d'aluminium oligomère.

5. Procédé pour la préparation de polymères de propylène selon les revendications 1 à 4, **caractérisé en ce que** l'on réalise la préparation des composants A) et B) conjointement, en présence de deux systèmes de catalyseurs différents décrits dans les revendications 2 à 4, dans une seule zone de réaction.

6. Procédé pour la préparation de polymères de propylène selon la revendication 5, **caractérisé en ce que** l'on travaille en phase gazeuse.

7. Utilisation de polymères de propylène selon les revendications 1 à 6, pour la fabrication de fibres, de feuilles et de corps façonnés.

8. Fibres, feuilles et corps façonnés que l'on obtient à partir des polymères de propylène selon les revendications 1 à 6, en tant que composants essentiels.
